Europäisches Patentamt

**European Patent Office**

Office européen des brevets

(19)

(11) Publication number: **0 043 253**
**A1**

(12) **EUROPEAN PATENT APPLICATION**

(21) Application number: **81302885.9**

(22) Date of filing: **26.06.81**

(51) Int. Cl.³: **B 29 C 27/00**
**B 65 D 19/38, F 16 B 4/00**
**F 16 B 17/00**

(30) Priority: **27.06.80 GB 8021191**

(43) Date of publication of application:
**06.01.82 Bulletin 82/1**

(84) Designated Contracting States:
**BE DE FR GB IT LU NL SE**

(71) Applicant: **FERODO LIMITED**
**20 St. Mary's Parsonage**
**Manchester M3 2NL(GB)**

(72) Inventor: **Mellor, Peter Gordon**
**23 Crossing Road**
**Chapel-en-le-Frith Stockport(GB)**

(74) Representative: **Crux, John Anthony et al,**
**20 St. Mary's Parsonage**
**Manchester M3 2NL(GB)**

(54) **Improvements in and relating to friction materials.**

㊼ An article (3) of relatively low friction material is provided with a relatively high friction insert portion (12,13) by forming an aperture (10,11) where the portion is to be located, making the portion in the form of an insert of a different cross-sectional shape which constitutes an interference fit in the aperture, followed by forcing the insert into the latter until only a relatively small portion of the insert projects from the surface of the article.

FIG.2

- 1 -

Improvements in and relating to friction materials

This invention relates to the incorporation of areas of relatively high friction into a surface of an article of relatively low surface friction material such as plastics and more particularly plastics in the form of structural foam. Structural foam articles are often used in essentially load-bearing applications. High friction in this present context means high in relation to the article and/or to anything the article surface is likely to contact in normal, everyday use.

Hitherto, small portions of the relatively high friction material have been adhered, screwed, bolted or rivetted onto the relatively low friction material. Adhesives are of uncertain durability and/or reliability. Mechanical fixing adds to the cost, especially where a large number of high friction portions are to be affixed to one article.

British Patent No. 1430718 discloses the use of nails to join soft, porous plastic articles in such a way that they can be fairly readily detached and reassembled in the same, or some different arrangement, as desired. British Patent No. 1452604 discloses a method of connecting timber components together by means of a force fit connector made of plastics. Neither document is concerned with the problem of providing areas of high friction on a load-bearing plastics article made from structural foam.

According to the present invention, a structural foam plastics article having relatively low surface friction properties is provided with at least one surface portion of relatively high friction, by forming an aperture corresponding to the position in which said relatively high friction area is desired, forming an insert from a material having said relatively high friction, with a different cross-section to that of the aperture, at least one dimension of said cross-section constituting an interference fit in said aperture, and the insert is thereafter forced into the aperture until only a relatively small part of it projects from the article to constitute said high friction portion.

It is convenient, (but not essential) that the aperture be circular in section, because such apertures can easily be drilled, or even moulded in situ. The relatively high friction material insert may then be of square or octagonal cross-section, for example; it may be regular or irregular.

Preferred relatively high friction materials are hard, to resist abrasion. However, they are preferably to a degree also resilient so that they tend to compensate for any creep which may occur in the material into which they are forced.

It is preferred that the majority of the high friction insert is embedded in the article, so that the risk of it working loose or being knocked out is minimal. The preferred minimum ratio of exposed to embedded length is about 1:3 and greater ratios such as 1:4 are desirable. Friction materials based on greater than 40 Shore D hardness and made from SBR have been found particularly suitable. It has proved convenient to mould the high friction material into inserts of the desired shape as a preliminary operation.

The primary use of the invention is in imparting a high friction characteristic to a surface of a relatively low friction article to stop it sliding too freely, or to stop another article sliding off it. Pallets of various kinds are prone to this kind of problem, especially when moulded from relatively smooth-surfaced plastics in the form of structural foam. Hitherto, the installation of portions of high friction material at strategic points has been labour-intensive and, in the case of adhesives, unreliable. The invention can reduce the labour aspect to a few simple drilling operations, followed by driving in preformed high friction inserts with a mallet.

Because the invention calls for an interference fit between non-complementary cross-sections, there is no real need for fine tolerances. The inserts can be just driven in with a wedging action and without particularly accurate alignment.

The invention has been found especially useful for plastics beer keg pallets. The traditional material for such pallets is plywood, which is of relatively limited durability. It does however have a fairly high coefficient of friction, especially when wet. This is important because these pallets are used in all weather conditions. Attempts to replace plywood by relatively surfaced smooth polypropylene structural foam have been fairly successful, but the coefficient of friction is about half that of plywood, wet or dry. This causes handling problems because not only do the pallets themselves slide, but also the kegs tend to rotate and even roll off. The use of the present invention minimizes these problems and gives selected areas of polypropylene structural foam pallets much the same, or even better surface friction than plywood.

It will be understood that the invention is of equal utility in providing areas of relatively low friction in a surface of an article of relatively high surface friction material. For this reason the expressions "high" and "low friction" are largely interchangeable in this specification and claims.

In order that the invention be better understood reference may be had to the accompanying drawings in which:-

Figure 1 is a perspective view of a beer keg pallet, and

Figure 2 is a greatly enlarged schematic view of part of Figure 1, it includes figure 2A, which shows a particularly preferred form of insert.

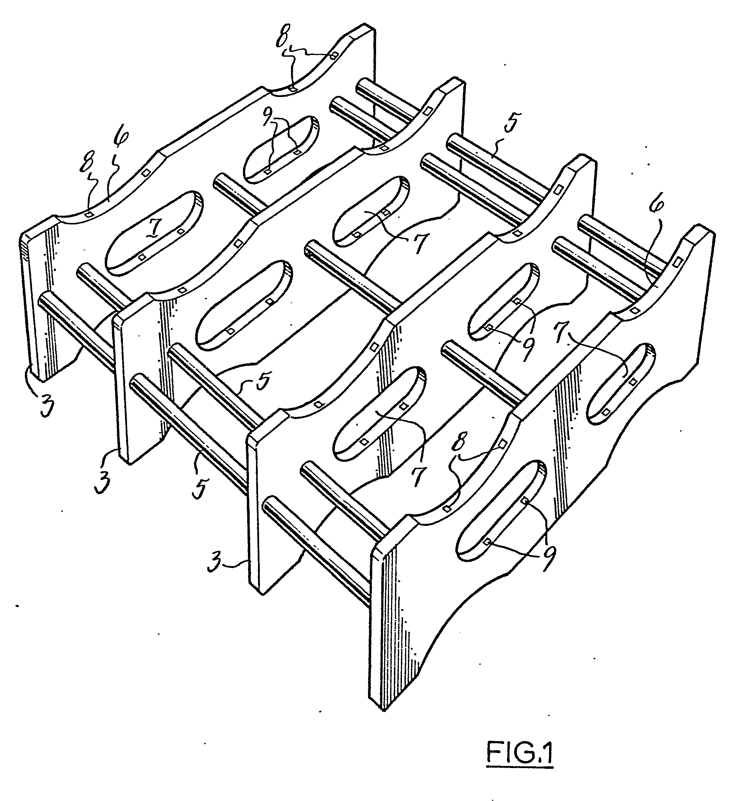

In Figure 1 a pallet comprises four yokes 3 moulded from structural foam plastics material and linked together by metal spacer bars 5. Each yoke has keg receiving recesses 6 and fork lift truck access holes 7. Relatively high friction inserts 8, 9 are provided as shown; the pallet is symmetrical, so that the inserts 9 have immediately above them identical inserts, in the same access holes, but not visible in the drawing. This is so that the lift truck forks will always abut against areas of relatively high friction, regardless of the orientation of the pallet. Likewise, kegs will always rest on areas of high friction 8. This greatly reduces the risk of pallet slippage on lifting; it also greatly reduces keg rotation whilst on the pallet.

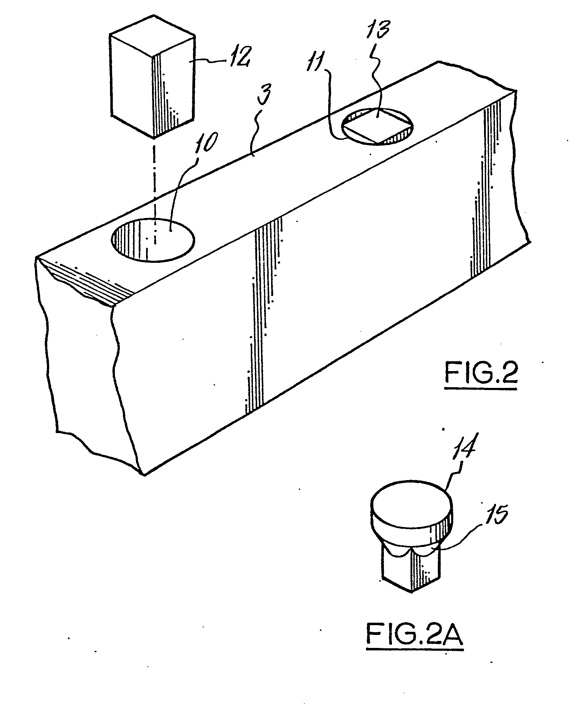

In Figure 2 part of one of the yokes is shown on an enlarged scale. Circular apertures 10, 11 are drilled in it and square, moulded inserts 12, 13 of relatively high friction material are provided. The insert 13 has been malleted into the aperture 11 so that only a small part of it lies proud of the surface of the yoke. The other insert 12 is shown above the aperture 10 and it features a very slight taper to facilitate entry into the aperture. All four corners of the insert are made to be an interferance fit relative to the aperture. In this case, the inserts were moulded from an SBR compound containing sulphur, china clay, carbon black and processing aids. It was very hard, but had some slight elasticity. The inserts were 15mm long and were driven in to leave some 3mm projecting proud of the surface of the yoke, which was itself moulded from a polypropylene structural foam composition.

In Figure 2A the insert has an enlarged head 14, the underside of which is connected to the shank of the insert by a sharply tapered portion 15. This has been found to be effective in preventing the insert being driven too far into the structural foam, either or initial installation or through rough handling in service.

Obviously, the method of the invention lends itself to the modification of existing articles. Such modification is within the scope of the invention.

CLAIMS:

1.  A method of providing on a structural foam plastics article having a relatively low surface friction properties at least one surface portion of relatively high friction, characterised in that an aperture is provided in the article corresponding to the position in which the relatively high friction portion is desired, forming an insert from a material having said relatively high surface friction, the insert having different cross-section to that of the aperture, and at least one dimension of said different cross-section constituting an interface fit in the aperture, followed by forcing the insert into the aperture until only a relatively small part of it projects from the surface of the article to constitute said high friction portion.

2.  The method of claim 1 characterised in that the aperture is circular in section and the insert is of square, or octagonal cross-section.

3.  The method of claim 1 characterised in that the aperture is circular in section and the insert has an irregular or regular different cross-section.

4.  The method of claim 1 characterised in that the portion is circular and the aperture is of an irregular or regular, different cross-section.

5.  The method of any preceding claim characterised in that the relatively low friction material is plastics and the relatively high friction portion has a Shore D hardness of at least 40.

FIG.1

FIG.2

FIG.2A

0043253

# EUROPEAN SEARCH REPORT

European Patent Office

Application number

EP 81 30 2885

## DOCUMENTS CONSIDERED TO BE RELEVANT

| Category | Citation of document with indication, where appropriate, of relevant passages | Relevant to claim |
|---|---|---|
| | FR - A - 2 346 228 (NIPPON) <br><br> * Claims 1,5,7; figures 11,12 * <br> --- | 1,5 |
| | FR - A - 2 310 277 (MITSUBISHI) <br><br> * Page 6, line 36 to page 8, line 18; figures 1,2,20,23-25 * <br> --- | 1 |
| | DE - A - 2 024 740 (LICENTIA) <br><br> * Claim 1 * <br> --- | 1 |
| | FR - A - 2 358 577 (ESSWEIN) <br><br> * Page 2, line 27 to page 3, line 3; figures 1 and 3 * <br> --- | 1,4 |
| | FR - A - 2 038 355 (PENN) <br><br> * Page 1, lines 1-28; figure 2 * <br><br> --------- | 1,4 |

**CLASSIFICATION OF THE APPLICATION (Int. Cl.³)**

B 29 C 27/00
B 65 D 19/38
F 16 B 4/00
F 16 B 17/00

**TECHNICAL FIELDS SEARCHED (Int. Cl.³)**

B 29 C
B 65 D
F 16 B

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 02.10.1981 | VAN DER WAL |

EPO Form 1503.1 06.78